(19)

**Europäisches Patentamt**

**European Patent Office**

**Office européen des brevets**

(11) **EP 4 664 377 A1**

(12) **EUROPEAN PATENT APPLICATION**

(43) Date of publication:
**17.12.2025 Bulletin 2025/51**

(21) Application number: **25179763.5**

(22) Date of filing: **29.05.2025**

(51) International Patent Classification (IPC):
**G06Q 30/0201** (2023.01)　　**G06Q 30/0204** (2023.01)

(52) Cooperative Patent Classification (CPC):
**G06Q 30/02011; G06N 3/044; G06N 3/045;
G06N 3/08; G06N 20/00; G06Q 30/02012;
G06Q 30/0204;** G06N 3/0475

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.06.2024　US 202463659953 P
05.02.2025　US 202563754199 P**

(71) Applicant: **Fiserv, Inc.
Milwaukee, WI 53203 (US)**

(72) Inventors:
• **ZHANG, Zhiqiang
San Ramon (US)**
• **HUANG, Yuanjun
Sunnyvale (US)**
• **JIANG, Xinshu
Sunnyvale (US)**
• **WANG, Rong
Campbell (US)**

(74) Representative: **Haseltine Lake Kempner LLP
One Portwall Square
Portwall Lane
Bristol BS1 6BH (GB)**

(54) **MACHINE-LEARNING MODELS FOR GENERATING AFFINITY PROFILES**

(57)　　A system comprising one or more processors and a computer-readable, non-transitory medium including instructions which, when executed by the one or more processors, cause at least one of the one or more processors to obtain transaction data including a first merchant and a first user, and train a machine-learning model using the transaction data by executing the machine-learning model using as input the transaction data to generate a first merchant embedding corresponding to the first merchant and a first user embedding corresponding to the first user determining a similarity between the first merchant embedding and the first user embedding, and updating the machine-learning model based on whether the first user made a purchase at the first merchant within a predetermined time period.

**Description**

**CROSS-REFERENCE TO RELATED APPLICATIONS**

This application claims priority to US Provisional Application No. 63/659,953, filed June 14, 2024, titled "MACHINE-LEARNING MODELS FOR GENERATING AFFINITY PROFILES" and US Provisional Application No. 63/754,199, filed February 5, 2025, titled "GENERATING NATURAL LANGUAGE ANALYSIS USING MACHINE-GENERATED AFFINITY PROFILES," which applications are incorporated herein by reference.

**BACKGROUND**

Analysis of customer shopping trends can aid in inventory management and marketing efforts. However, customer surveys are time-consuming, expensive, and prone to various sampling errors.

**SUMMARY**

Various aspects of the disclosure may now be described with regard to certain examples and embodiments, which are intended to illustrate but not limit the disclosure. Although the examples and embodiments described herein may focus on, for the purpose of illustration, specific systems and processes, one of skill in the art may appreciate the examples are illustrative only, and are not intended to be limiting.

Aspects of the present disclosure relate to a system including one or more processors, and a computer-readable, non-transitory medium including instructions which, when executed by the one or more processors, cause at least one of the one or more processors to obtain transaction data including a first merchant and a first user, and train a machine-learning model using the transaction data by executing the machine-learning model using as input the transaction data to generate a first merchant embedding corresponding to the first merchant and a first user embedding corresponding to the first user, determining a similarity between the first merchant embedding and the first user embedding, and updating the machine-learning model based on whether the first user made a purchase at the first merchant within a predetermined time period.

In some implementations, the instructions cause the one or more processors to update the machine-learning model based on a number of purchases made by the first user at the first merchant within the predetermined time period. In some implementations, the instructions cause the one or more processors to update the machine-learning model using a weighted number of purchases made by the first user at the first merchant relative to other purchases made by the first user within the predetermined time period. In some implementations, the instructions cause the one or more processors to weight the number of purchases made by the first user at the first merchant using transaction amounts of the number of purchases. In some implementations, the instructions cause the one or more processors to weight whether the first user made a purchase at the first merchant within the predetermined time period based on a number of other users who did not make a purchase at the first merchant within the predetermined time period. In some implementations, the instructions cause the one or more processors to train the machine-learning model by executing the machine-learning model using as input the transaction data and first user features of the first user and first merchant features of the first merchant.

In some implementations, the transaction data includes a plurality of merchants and a plurality of users, and wherein the instructions cause the one or more processors to execute the machine-learning model using as input the transaction data to generate a plurality of merchant embeddings and a plurality of user embeddings. In some implementations, the instructions cause the one or more processors to execute the machine-learning model using as input second user data of a second user to generate a second user embedding, determine similarity scores between the second user embedding and the plurality of user embeddings, and based on the similarity scores, determine a set of nearest users of the plurality of users to the second user. In some implementations, the instructions cause the one or more processors to execute the machine-learning model using as input second merchant data of a second merchant to generate a second merchant embedding, determine similarity scores between the second merchant embedding and the plurality of merchant embeddings, and based on the similarity scores, determine a set of nearest merchants of the plurality of users to the second merchant. In some implementations, the instructions cause the one or more processors to execute the machine-learning model using as input second user data of a second user to generate a second user embedding, determine similarity scores between the second user embedding and the plurality of merchant embeddings, and based on the similarity scores, determine a set of nearest merchants of the plurality of users to the second user.

Aspects of the present disclosure are directed to a method including obtaining transaction data including a first merchant and a first user, training a machine-learning model using the transaction data by executing the machine-learning model using as input the transaction data to generate a first merchant embedding corresponding to the first merchant and a first user embedding corresponding to the first user, determining a similarity between the first merchant embedding and the first user embedding, and updating the machine-learning model based on whether the first user made a purchase at the first merchant within a predetermined time period.

In some implementations, the method includes updating the machine-learning model based on a number of purchases made by the first user at the first merchant within the predetermined time period. In some implementations, updating the machine-learning model based on the number of purchases made by the first user at the first merchant includes weighting the number of purchases made by the first user at the first merchant relative to other purchases made by the first user within the predetermined time period. In some implementations, the method includes weighting the number of purchases made by the first user at the first merchant using transaction amounts of the number of purchases. In some implementations, the method includes weighting whether the first user made a purchase at the first merchant within the predetermined time period based on a number of other users who did not make a purchase at the first merchant within the predetermined time period. In some implementations, training the machine-learning model includes executing the machine-learning model using as input the transaction data and first user features of the first user and first merchant features of the first merchant.

In some implementations, the transaction data includes a plurality of merchants and a plurality of users, and wherein training the machine-learning model includes executing the machine-learning model using as input the transaction data to generate a plurality of merchant embeddings and a plurality of user embeddings. In some implementations, the method includes executing the machine-learning model using as input second user data of a second user to generate a second user embedding, determining similarity scores between the second user embedding and the plurality of user embeddings, and based on the similarity scores, determining a set of nearest users of the plurality of users to the second user. In some implementations, the method includes executing the machine-learning model using as input second merchant data of a second merchant to generate a second merchant embedding, determining similarity scores between the second merchant embedding and the plurality of merchant embeddings, and based on the similarity scores, determining a set of nearest merchants of the plurality of users to the second merchant. In some implementations, the method includes executing the machine-learning model using as input second user data of a second user to generate a second user embedding, determining similarity scores between the second user embedding and the plurality of merchant embeddings, and based on the similarity scores, determining a set of nearest merchants of the plurality of users to the second user.

The foregoing summary is illustrative only and is not intended to be in any way limiting. In addition to the illustrative aspects, embodiments, and features described above, further aspects, embodiments, and features may become apparent by reference to the following drawings and the detailed description.

BRIEF DESCRIPTION OF THE DRAWINGS

FIG. 1 is a block diagram of an example system for generating affinity profiles.

FIG. 2 is a block diagram of an example machine learning architecture to generate user embeddings and merchant embeddings.

FIG. 3 is a block diagram of an example machine learning architecture to generate user embeddings and merchant embeddings.

FIG. 4 is a block diagram of an example system to identify nearest users to a user.

FIG. 5 is a block diagram of an example system to identify nearest merchants to a merchant.

FIG. 6 is a block diagram of an example system to identify nearest merchants to a user.

FIG. 7 is a block diagram of an example system to identify nearest users to a merchant.

FIG. 8 is a block diagram of an example computing system.

FIG. 9 is a block diagram of an example system including machine-learning models for generating a GUI displaying analytics of user behavior.

FIG. 10 is a block diagram of an example system for training an LLM-based recommender model.

FIG. 11 is a block diagram of an example system for using the LLM-based recommender model of FIG. 10 to generate data for display on a GUI.

FIG. 12 is an example user interface of the GUI of FIG. 9 or the GUI of FIG. 11.

FIG. 13 is an example user interface of the GUI of FIG. 9 or the GUI of FIG. 11.

FIG. 14 is an example user interface of the GUI of FIG. 9 or the GUI of FIG. 11.

The foregoing and other features of the present disclosure may become apparent from the following description and appended claims, taken in conjunction with the accompanying drawings. Understanding that these drawings depict only several embodiments in accordance with the disclosure and are therefore, not to be considered limiting of its scope, the disclosure may be described with additional specificity and detail through use of the accompanying drawings.

## DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It may be readily understood that the aspects of the present disclosure, as generally described herein, and illustrated in the figures, may be arranged, substituted, combined, and designed in a wide variety of different configurations, all of which are explicitly contemplated and made part of this disclosure.

Aspects of the present disclosure relate to generating affinity profiles for users and merchants. The examples and embodiments discussed herein allow for extracting information regarding users and merchants without requiring access to personal information of the users. Instead, user embeddings and merchant embeddings can be extracted from transaction data. In this way, transaction data, including purchases made by users at merchants, can be used to generate vectors describing user features (user embeddings) and/or vectors describing merchant features (merchant embeddings). By analyzing distances between these embeddings, connections and relationships between users, other users, and merchants can be revealed. User profiles and/or merchant profiles can be generated based on these connections and relationships. A user profile can describe a user relative to merchants the user shops at and other merchants the user is expected to shop at. A merchant profile can describe a category of a merchant and a grouping of other merchants that users are expected to shop at if they shop at the merchant. Additionally, user journeys can be generated based on the embeddings and the profiles. A user journey can describe an expected series of purchases of a user. In this way, user characteristics and user behavior can be predicted using historical transaction data of the user.

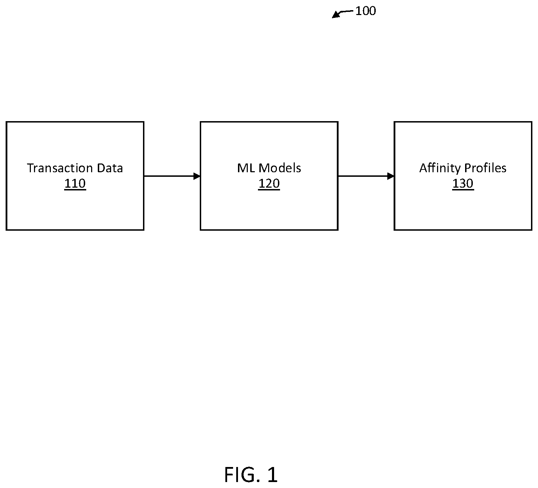

FIG. 1 is a block diagram of a system 100 for generating affinity profiles 130. The affinity profiles 130 may include user profiles, merchant profiles, user journeys, merchant clusters, and/or user clusters. A user profile may be a description of a user including characteristics of the user, merchants the user has shopped at or is expected to shop at, and/or characteristics of user similar to the user. A merchant profile may be a description of a merchant including characteristics of the merchant, merchants that are similar to the merchant, and/or characteristics of users who shop at the merchant. A user journey may be a path a user takes or is expected to take, the path describing a sequence of purchases or merchants. In an example, a user journey may be a sequence of purchases for a traveler at a hotel, an airline, and a car rental service. In this example, if a user makes a purchase at the hotel and the airline, a subsequent purchase at the car rental service can be predicted based on the user journey. In an example, a user journey can be a sequence of purchase for a student at a bookstore, a fitness center, and a laundromat. In this example, if a user makes a purchase at the laundromat, a subsequent purchase at the bookstore can be predicted based on the user journey. A merchant cluster may be a cluster of merchants having similar characteristics and/or a cluster of merchants at which similar users shop. A user cluster may be a cluster of users having similar characteristics and/or a cluster of users who shop at similar merchants.

The system 100 includes machine learning models 120 which receive as input transaction data 110 to generate the affinity profiles 130. By utilizing transaction data 110, the system 100 is able to provide the affinity profiles 130 without collecting personal information of users such as age, sex, employment, education, and/or other information. Such information may be difficult to gather and may be inaccurate as reported. By using the machine learning models 120 to generate the affinity profiles 130, accurate characterizations of users and merchants can be obtained based on ground truth transaction data without gathering personal information from users.

The affinity profiles 130 may be used in analyzing user characteristics and merchant characteristics to generate predictions. In an example, based on the user characteristics and the merchant characteristics, a prediction can be made as to which users are likely to shop at which merchant. This prediction can be used to direct marketing messages to the users. In an example, a user profile can be used to predict which merchants the user is likely to shop at. This prediction can be used to manage inventory at the merchants.

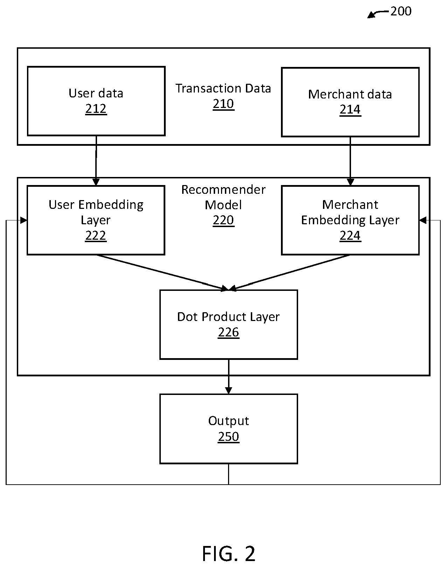

FIG. 2 is a block diagram of a machine learning architecture 200 to generate affinity profiles. The machine learning architecture 200 includes a recommender model 220. In some implementations, the recommender model 220 is a neural network. The recommender model 220 may receive as input transaction data 210 to generate an output 250. The transaction data 210 may include user data 212 and merchant data 214. The user data 212 and the merchant data 214 may be connected in transactions. The user data 212 may be a view or an organization of the transaction data 210 by user and the merchant data 214 may be a view or an organization of the transaction data 210 by merchant. In an example, the user data 212 includes a user identifier and transactions associated with the user identifier, where the transactions were performed at various different merchants. In an example, the merchant data 214 includes transactions performed at a merchant by various users. The user data 212 may include user data for a plurality of users. The merchant data 214 may include merchant data for a plurality of merchants. The transaction data 210 may include transactions performed by users of the user data 212 at merchants of the merchant data 214.

The recommender model 220 may include a user embedding layer 222 and a merchant embedding layer 224. The user embedding layer 222 is configured to generate a user embedding based on the user data 212. In some implementations, the recommender model includes a feature extraction layer which extracts user features which are used as input for the user embedding layer 222. The user embedding layer 222 may generate the user embedding to represent a description of the user. In some implementations, the user embedding layer 222 uses an initial user embedding to generate a user embedding for a user, where the initial user embedding is initialized with random data. The merchant embedding layer 224 is configured to generate a merchant embedding based on the merchant data 214. In some implementations, the recommender model includes a feature extraction layer which extracts merchant features which are used as input for the merchant embedding layer 224. The merchant embedding layer 224 may generate the merchant embedding to represent a description of the merchant. In some implementations, the merchant embedding layer 224 uses an initial merchant embedding to generate a merchant embedding for a merchant, where the initial merchant embedding is initialized with random data.

The recommender model 220 may include a dot product layer 226 which takes the dot product of a user embedding from the user embedding layer 222 and a merchant embedding from the merchant embedding layer 224. The dot product of the user embedding and the merchant embedding may represent the interaction between the user and the merchant (e.g., likelihood of the user shopping at the merchant). The dot product of the user embedding and the merchant embedding may be provided in the output 250 of the recommender model 220. The output 250 may be a matrix including the dot products of a plurality of users and a plurality of merchants. The recommender model 220 may update the output 250 using collaborative filtering, where known interactions between users and merchants from the transaction data 210 are used to infer unknown interactions between users and merchants. In an example, a first user shops at a first merchant and a second merchant and a second user shops at the first merchant, such that it can be inferred that the second user might shop at the second merchant. The output 250 may be iteratively updated based on known and inferred interactions. In some implementations, the known interactions are given greater weight than the inferred interactions in inferring additional interactions.

The output 250 may be used to train or update the user embedding layer 222 and the merchant embedding layer 224. A distance between the user embedding generated by the user embedding layer 222 and the merchant embedding generated by the merchant embedding layer, as informed by the collaborative filtering, may be used to update the user embedding layer 222. In this way, the user embedding layer 222 is updated to accurately generate the user embedding based on the user data 212. The trained user embedding layer 222 may be used to generate a new user embedding based on new user data without the aid of collaborative filtering in the output 250. Similarly, a distance between the merchant embedding generated by the merchant embedding layer 224 and the user embedding generated by the user embedding layer 222, as informed by the collaborative filtering, may be used to update the merchant embedding layer 224. In this way, the merchant embedding layer 224 is updated to accurately generate the merchant embedding based on the merchant data 214. The trained merchant embedding layer 224 may be used to generate a new merchant embedding based on new merchant data without the aid of collaborative filtering in the output 250.

The user embeddings may be user profiles of the users, or can be used to generate user profiles of the users. Similarly, the merchant embeddings may be merchant profiles of the merchants, or can be used to generate merchant profiles of the merchants. In an example, a user embedding generated by the user embedding layer 222 can be used to extract a top ten merchants for the user, where the user profile includes the top ten merchants for the user ranked according to affinity. In an example, a merchant embedding generated by the merchant embedding layer 224 can be used to extract characteristics of users who shop at the merchant, where the merchant profile includes the characteristics of the users who shop at the merchant. The recommender model 220, as discussed above, can be used to generate user embeddings and merchant embeddings based on new transaction data.

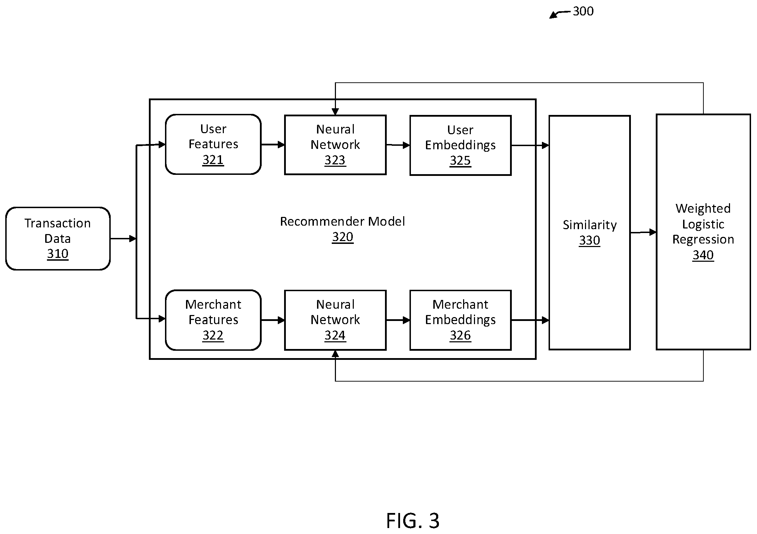

FIG. 3 is a block diagram of a machine learning architecture 300 to generate affinity profiles. The machine learning architecture 300 includes a recommender model 320 which receives as input transaction data 310 to generate merchant embeddings and user embeddings. The transaction data 310 may include transactions between users and merchants. In an example, the transaction data 310 includes a plurality of transactions each identifying a user, a merchant, a date and time, and a transaction amount.

The recommender model includes a user neural network 323 and a merchant neural network 324. The recommender model may be multi-modal with the user neural network 323 dealing with a user modality and the merchant neural network 324 dealing with a merchant modality. The user neural network 323 receives as input user features 321. The user features 321 for a user may be a vector assigned to the user including features of the user. The user features 321 may include features extracted from the transaction data 310 as well as additional feature such as a user's spending amount tiers, a user's preference for different payment channels (e.g., in-store, online), and a user's category preferences (e.g., entertainment, restaurants, etc.). The user neural network 323 may generate the user embeddings 325 using as input the user features 321, where the user embeddings 325 describe characteristics of the users. The user embeddings 325 may be vectors describing characteristics of the users. The user neural network 323 may include one or more transformation layers. Similarly, the merchant neural network 324 receives as input merchant features 322. The merchant features 322 for a merchant may be a vector assigned to the merchant including features of the merchant. The merchant features 322 may include features extracted from the transaction data 310 as well as additional feature such as a merchant category, a merchant size, a merchant footprint, merchant data extracted from the merchant's website, and other merchant data. The merchant neural network 324 may generate the merchant embeddings 326 using as input the merchant features 322, where the merchant embeddings 326 describe characteristics of the merchants. The merchant embeddings 326 may be vectors describing characteristics of the merchants. The merchant neural network 324 may include one or more transformation layers.

A similarity comparison 330 is performed to determine a similarity (e.g., similarity score) of the user embeddings 325 and the merchant embeddings 326. The similarity comparison 330 may be a dot product of a user embedding and a merchant embedding representing a similarity or distance between the user embedding and the merchant embedding. The output of the similarity comparison 330 (i.e., the dot products of the user embeddings 325 and the merchant embeddings 326, the similarity score) is provided as input to a weighted logistic regression 340. The weighted logistic regression 340 may provide weights to interactions (e.g., transactions) between users and merchants. In an example, the weighted logistic regression 340 provides weights to transactions to prevent increase a sensitivity of purchases among a large number of merchants. The weighted logistic regression 340 may incorporate weights into a loss function for the recommender model 320. The weights may reflect a frequency of purchases by a user, transaction amounts of purchases, and/or a number of purchases at a merchant over a total number of purchases. The weighted logistic regression 340 is used to update the recommender model. The weighted logistic regression 340 is used to update the user neural network 323 and/or the merchant neural network 324.

In an example, the weighted logistic regression 340 produces 1 when a use made a purchase at a merchant, and a 0 when the user never made a purchase at the merchant, with a probability of a purchase given as $p$ in Expression 1.

$$\text{Expression 1: } p = \frac{1}{1 + e^{-<u,v>}}$$

In Expression 1, $< u, v >$ represents the dot product of the user embedding and the merchant embedding. For positive samples, the weighted logistic regression 340 may use a weight derived from the frequency of purchase as in Expression 2.

$$\text{Expression 2: } \left(\frac{N_1}{N_2}\right) * s * \log\left(\frac{T_1}{T_2}\right)$$

In Expression 2, $N_1$ is a number of times the user purchased at the merchant, $N_2$ is a number of times the user purchased at all merchants, s is a scaling factor that can be tuned based on a training data period, $T_1$ is a number of users in a corpus of users (e.g., number of users in the transaction data 310), and $T_2$ is a number of users who purchased at the merchant. Weights can be normalized to tune the recommender model 320. Weights can be calculated to take into account the amount of purchase as in Expression 3.

$$\text{Expression 3: } \left(\frac{A_1}{A_2}\right) * r * \log\left(\frac{B_1}{B_2}\right)$$

In Expression 3, $A_1$ is an amount spent by the user at the merchant, $A_2$ is an amount the user spent at all merchants, $r$ is a scaling factor that can be tuned based on a training data period, $B_1$ is an amount spent at all merchants by all the users in the corpus of users, and $B_2$ is an amount spent by all the users in the corpus at the merchant. Weights can be normalized to tune the recommender model 320. Weights can be combined with other weights. In an example, a frequency weight can be combined with an amount weight to calculate a total weight. In this example, the frequency weight and the amount weight can be weighted to affect a contribution to the total weight of the frequency weight and the amount weight.

For negative samples, the weighted logistic regression 340 may use a weight based on a proportion of users who did not purchase at the merchant as in Expression 4.

$$\text{Expression 4: } \max\left(\log\left(\frac{T_1}{T_3}\right), wn\right)$$

In Expression 4, $T_1$ is the number of users in the corpus of users (e.g., number of users in the transaction data 310), $T_3$ is a total number of users who have not purchased at the merchant, and $wn$ is a standard weight which can be tuned as needed. The weights used in the weighted logistic regression 340 may be based on a predetermined time period. In an example, a frequency-based weight is based on a frequency of purchases at a merchant within the predetermined time period as compared to all other purchases made within the predetermined time period. In an example, an amount-based weight is based on an amount of purchases at a merchant within the predetermined time period as compared to a total amount of purchases made within the predetermined time period. In an example, a negative weight is based on a number of users who did not purchase at a merchant within the predetermined time period.

The weighted logistic regression 340 may provide a weighted loss function (e.g., a weighted logistic regression loss function) to update the recommender model 320 using a calculated loss (e.g., cross-entropy loss). As discussed above, the weighted logistic regression 340 may weight transactions based on frequency, amount, total number of transactions, total number of users, and a total amount spent. In this way, the recommender model 320 may be tuned based on a variety of factors to accurately reflect purchasing decisions and the relative importance of purchasing decisions.

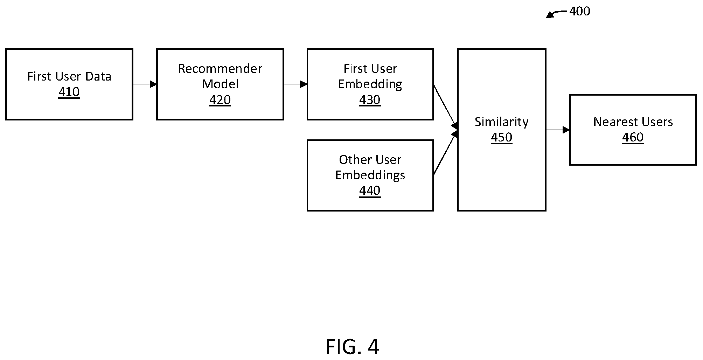

FIG. 4 is a block diagram of a system 400 to identify nearest users to a user. The system includes a recommender model 420, such as the recommender model 220 of FIG. 2 or the recommender model 320 of FIG. 3. The recommender model 420 may be the recommender model 220 of FIG. 2 or the recommender model 320 of FIG. 3, deployed after training. The recommender model 420 receives as input first user data 410 to generate a first user embedding 430. The first user data 410 may be extracted from transaction data. The system 400 includes a similarity comparison 450. In some implementations, the similarity comparison 450 is part of the recommender model 420. The similarity comparison 450 determines a similarity between the first user embedding 430 and other user embeddings 440 (e.g., similarity score). In some implementations, the other user embeddings 440 were generated by the recommender model 420. The similarity comparison 450, based on the similarity between the first user embedding 430 and other user embeddings 440 (e.g., similarity score), outputs nearest users 460. The nearest users 460 may include a predetermined number of users that are nearest to the first user in the user embedding space. The nearest users 460 may include users that are above a predetermined similarity threshold to the first user. The nearest users 460 may have characteristics similar to the first user or have purchase behaviors similar to purchase behaviors of the first user. Thus, unknown characteristics or unknown purchase behaviors of the first user can be inferred based on the nearest users 460. The nearest users 460 can be part of a user profile of the user to help predict behavior of the first user.

In an example, the first user uses two digital payments merchants and the nearest users 460 use multiple digital payments merchants including the two digital payments merchants, allowing for a prediction that the first user may use other digital payments merchants of the multiple digital payments merchants. Further, if the nearest users 460 generally follow a progression, or user journey of using a first digital payments merchant and then a second digital payments merchant, use of the first digital payments merchant by the first user may be used to predict use of the second digital payments merchant. In another example, the first user makes purchases at a first streaming platform and a first gaming platform and the nearest users 460 generally make purchases at the first streaming platform, a second streaming platform, and a second gaming platform. In this example, the nearest user 460 and their purchases can be used to predict purchase by the first user at the second streaming platform and the second gaming platform.

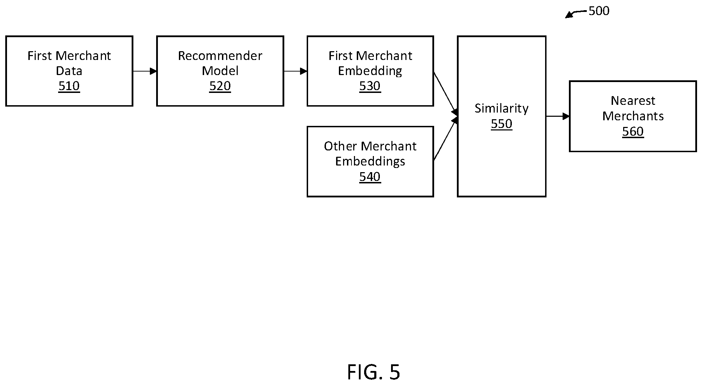

FIG. 5 is a block diagram of a system to identify nearest merchants to a merchant. The system includes a recommender model 520, such as the recommender model 220 of FIG. 2 or the recommender model 320 of FIG. 3. The recommender model 520 may be the recommender model 220 of FIG. 2 or the recommender model 320 of FIG. 3, deployed after training. The recommender model 520 receives as input first merchant data 510 to generate a first merchant embedding 530. The first merchant data 510 may be extracted from transaction data. The system 500 includes a similarity comparison 550. In some implementations, the similarity comparison 550 is part of the recommender model 520. The similarity comparison 550 determines a similarity between the first merchant embedding 530 and other merchant embeddings 540 (e.g., similarity score). In some implementations, the other merchant embeddings 540 were generated by the recommender model 520. The similarity comparison 550, based on the similarity between the first merchant embedding 530 and other merchant embeddings 540, outputs nearest merchants 560 to the first merchant. The nearest merchants 560 may include a predetermined number of merchants that are nearest to the first merchant in the merchant embedding space. The nearest merchants 560 may include merchants that are above a predetermined similarity threshold to the first merchant. The nearest merchants 560 may have characteristics similar to the first merchant or have purchasing users similar to purchasing users of the first merchant. Thus, unknown characteristics or unknown purchasing users of the first merchant can be inferred based on the nearest merchants 560. The nearest merchants 560 can be part of a merchant profile of the merchant to help predict characteristics or future purchasing users of the first merchant.

In some implementations, user profiles can be updated based on the nearest merchants 560. The first merchant and the nearest merchants 560 may be a cluster of merchants or be included in a cluster of merchants. Clusters of merchants may be merchants that have embeddings that are clustered together in the embedding space. In an example, a cluster of merchants is a group of merchants whose embeddings are within a predetermined similarity threshold in the embedding space. A clusters of merchants where one or more of the merchants are associated with a user profile may be used to update the user profile. In some implementations, a cluster of merchants is used to update a user profile if a predetermined number of merchants of the cluster are associated with the user profile. The user profile may be updated with an identifier of the cluster, with characteristics of the cluster, and/or a category of the cluster.

In some implementations, merchants in a merchant cluster are in a same merchant category. A user profile associated with the cluster may be updated as having an affinity with the cluster and/or the merchant category. In an example, the user profile can be updated to reflect frequent purchases associated with the cluster. In an example, the user profile can be updated with a label of "fast food lover" based on the user profile being associated with a merchant cluster including fast food restaurants. In an example, the user profile can be updated with a label of "student" based on the user profile being associated with a merchant cluster including merchants frequented by students.

In some implementations, merchants in a merchant cluster are in different merchant categories. A user profile associated with the cluster may be updated as having an affinity with a user journey including the merchant cluster. As discussed herein, the user journey may be a sequence of purchases made at different merchants that are logically linked together. In an example, the user profile can be updated with a label of "traveler" or "traveling" based on the user profile being associated with a merchant cluster including hotels, rideshare services, airlines, car rental companies, and/or toll service providers. In this way, the user profile can be updated to reflect frequent traveling or current travel. In another example, the user profile can be updated with a label of "parent" based on the user profile being associated with a merchant cluster including book stores, children's clothing stores, and eyeglasses providers. The updated user profile can be used to predict the user's next step in the user journey, and/or to influence the user's next step in the user journey.

In some implementations, a representative merchant, also referred to as an "anchor merchant" in a merchant cluster can be used to refine user profiles. The representative merchant can be associated with multiple, or a majority of user profiles associated with the merchant cluster, meaning that multiple, or a majority of users associated with the cluster made purchases at the representative merchant. In an example, a merchant cluster of businesses associated with students may have a representative merchant of a laundromat service which provides washers and dryers in student dorms. A user making a purchase at the laundromat service may be a strong indicator that the user is a student, allowing for the corresponding user profile to be updated with the label of "student" even if the user profile is not associated with the predetermined number of merchants of the cluster to be previously labeled with the label of "student." In another example, a baby clothes store may be a representative merchant for a merchant cluster associated with young mothers. The representative merchant and/or other merchants may be used to update a user profile with the label of "young mother" despite the user profile not being associated with the predetermined number of merchants of the cluster to be previously labeled with the label of "young mother." In this way, representative merchants can be used to identify users in early stages of user journeys, and/or refine user profiles to provide more accurate analysis and predictions of user behavior.

Similarly, locations of transactions can be used to refine user profiles. The locations can be associated with user profiles having characteristics that can be inferred for other user profiles having similar characteristics and/or for user profiles associated with the locations. In an example, a user making multiple purchases on a university campus may be inferred to be a student based on the purchases and the location of the purchases. A user profile of the user can be updated based on inferences of the user profile having certain characteristics in common with other user profiles of students, or students at the same university. In this way, the locations of transactions can be used similar to the representative merchants, to aid in identifying users in early stages of user journeys, to discover affinities for building user profiles, and/or for refining user profiles to provide more accurate analysis and predictions of user behavior.

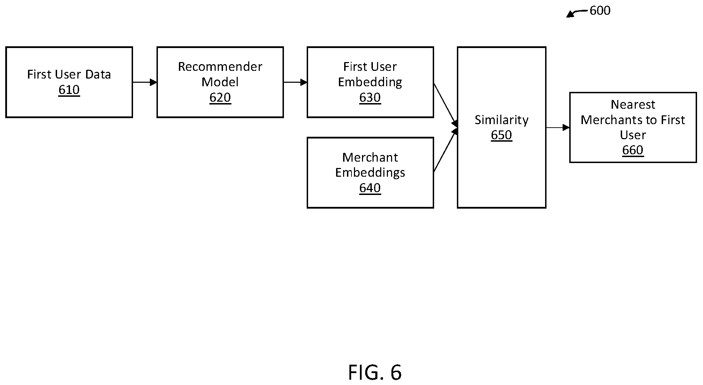

FIG. 6 is a block diagram of a system 600 to identify nearest merchants to a user. The system includes a recommender model 620, such as the recommender model 220 of FIG. 2 or the recommender model 320 of FIG. 3. The recommender model 620 may be the recommender model 220 of FIG. 2 or the recommender model 320 of FIG. 3, deployed after training. The recommender model 620 receives as input first user data 610 to generate a first user embedding 630. The first user data 610 may be extracted from transaction data. The system 600 includes a similarity comparison 650. In some implementations, the similarity comparison 650 is part of the recommender model 620. The similarity comparison 650 determines a similarity between the first user embedding 630 and merchant embeddings 640 (e.g., similarity score). In some implementations, the merchant embeddings 640 were generated by the recommender model 620. The similarity comparison 650, based on the similarity between the first user embedding 630 and the merchant embeddings 640, outputs nearest merchants 660 to the first user. The nearest merchants 660 may include a predetermined number of merchants that are nearest to the first user in the embedding space. The nearest merchants 660 may include merchants that are above a predetermined similarity threshold to the first user. The nearest merchants 660 may have characteristics similar to the first user or to merchants the first user has shopped at. The nearest merchants 660 may represent merchants that the first user has an affinity to, or which the first user may like. In this way, the recommender model 620 may recommend merchants to the first user and/or predict future purchases of the first user.

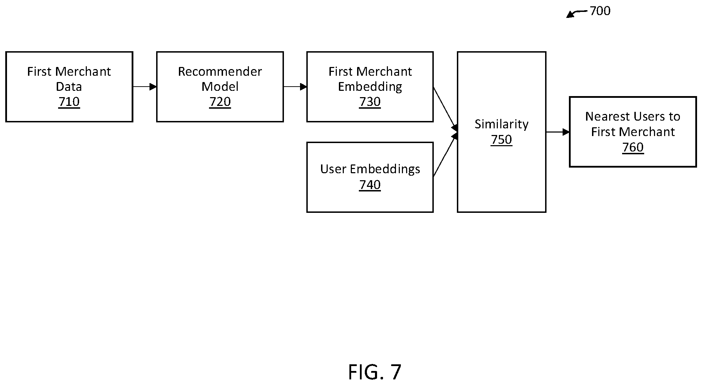

FIG. 7 is a block diagram of a system 700 to identify nearest users to a merchant. The system includes a recommender model 720, such as the recommender model 220 of FIG. 2 or the recommender model 320 of FIG. 3. The recommender model 720 may be the recommender model 220 of FIG. 2 or the recommender model 320 of FIG. 3, deployed after training. The recommender model 720 receives as input first merchant data 710 to generate a first merchant embedding 730. The first merchant data 710 may be extracted from transaction data. The system 700 includes a similarity comparison 750. In some implementations, the similarity comparison 750 is part of the recommender model 720. The similarity comparison 750 determines a similarity between the first merchant embedding 730 and user embeddings 740 (e.g., similarity score). In some implementations, the user embeddings 740 were generated by the recommender model 720. The similarity comparison 750, based on the similarity between the first merchant embedding 730 and the user embeddings 740, outputs nearest users 760 to the first merchant. The nearest users 760 may include a predetermined number of users that are nearest to the first merchant in the embedding space. The nearest users 760 may include users that are above a predetermined similarity threshold to the first merchant. The nearest users 760 may have characteristics similar to the first merchant or to users who have shopped at the first merchant. The nearest users 760 may represent users that have an affinity to the first merchant or which may like the first merchant. In this way, the recommender model 720 may recommend users to the first merchant and/or predict future purchases by the nearest users 760 at the first merchant.

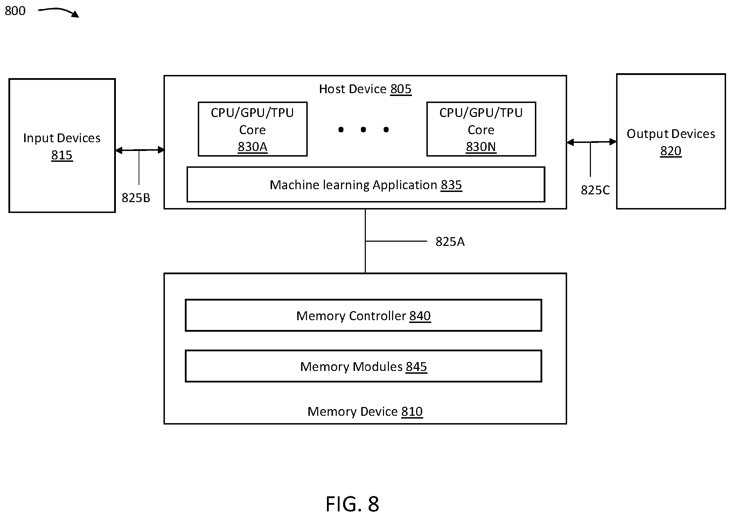

FIG. 8 is a block diagram of a computing system 800, in accordance with some embodiments of the present disclosure. The computing system 800 includes a host device 805 associated with a memory device 810. The host device 805 may be configured to receive input from one or more input devices 815 and provide output to one or more output devices 820. The host device 805 may be configured to communicate with the memory device 810, the input devices 815, and the output devices 820 via appropriate interfaces or channels 825A, 825B, and 825C, respectively. The computing system 800 may be implemented in a variety of computing devices such as computers (e.g., desktop, laptop, etc.), tablets, personal digital assistants, mobile devices, wearable computing devices such as smart watches, other handheld or portable devices, or any other computing unit suitable for performing operations described herein using the host device 805.

Further, some or all of the features described in the present disclosure may be implemented on a client device, a server device, or a cloud/distributed computing environment, or a combination thereof. Additionally, unless otherwise indicated, functions described herein as being performed by a computing device (e.g., the computing system 800) may be implemented by multiple computing devices in a distributed environment, and vice versa.

The input devices 815 may include any of a variety of input technologies such as a keyboard, stylus, touch screen, mouse, track ball, keypad, microphone, voice recognition, motion recognition, remote controllers, input ports, one or more buttons, dials, joysticks, and any other input peripheral that is associated with the host device 805 and that allows an external source, such as a user, computer, or database, to enter information (e.g., data) into the host device and send instructions to the host device 805. Similarly, the output devices 820 may include a variety of output technologies such as external memories, databases, printers, speakers, displays, microphones, light emitting diodes, headphones, plotters, speech generating devices, video devices, and any other output peripherals that are configured to receive information (e.g., data) from the host device 805. The "data" that is either input into the host device 805 and/or output from the host device may include any of a variety of textual data, graphical data, video data, sound data, position data, combinations thereof, or other types of analog and/or digital data that is suitable for processing using the computing system 800.

The host device 805 may include one or more Central Processing Unit ("CPU"), Graphics Processing Unit ("GPU"), or Tensor Processing Unit ("TPU") cores or processors 830A-830N that may be configured to execute instructions for running one or more applications associated with the host device 805. In some embodiments, the instructions and data needed to run the one or more applications may be stored within the memory device 810. The host device 805 may also be configured to store the results of running the one or more applications within the memory device 810. One such application on the host device 805 may include a machine learning application 835. The machine learning application 835 may be executed by one or more of the CPU/GPU cores 830A-830N. The instructions to execute the machine learning application 835 may be stored within the memory device 810. The machine learning application 835 is described in greater detail herein and may perform functions such as described in FIGS. 1-7 and FIG. 9. Thus, the host device 805 may be configured to request the memory device 810 to perform a variety of operations. For example, the host device 805 may request the memory device 810 to read data, write data, update or delete data, and/or perform management or other operations.

To facilitate communication with the memory device 810, the memory device 810 may include or be associated with a memory controller 840. Although the memory controller 840 is shown as being part of the memory device 810, in some embodiments, the memory controller 840 may instead be part of the host device 805 or another element of the computing system 800 and operatively associated with the memory device 810. The memory controller 840 may be configured as a logical block or circuitry that receives instructions from the host device 805 and performs operations in accordance with those instructions. For example, when the execution of the machine learning application 835 is desired, the host device 805 may send a request to the memory controller 840. The memory controller 840 may read the instructions associated with the machine learning application 835 that are stored within the memory device 810, and send those instructions back to the host device. In some embodiments, those instructions may be temporarily stored within a memory on the host device 805. One or more of the CPU/GPU cores 830A-830N may then execute those instructions by performing one or more operations called for by those instructions of the machine learning application 835.

The memory device 810 may include one or more memory circuits 845 that store data and instructions. The memory circuits 845 may be any of a variety of memory types, including a variety of volatile memories, non-volatile memories, or a combination thereof. For example, in some embodiments, one or more of the memory circuits 845 or portions thereof may include NAND flash memory cores. In other embodiments, one or more of the memory circuits 845 or portions thereof may include NOR flash memory cores, Static Random Access Memory (SRAM) cores, Dynamic Random Access Memory (DRAM) cores, Magnetoresistive Random Access Memory (MRAM) cores, Phase Change Memory (PCM) cores, Resistive Random Access Memory (Re-RAM) cores, 3D XPoint memory cores, ferroelectric random-access memory (FeRAM) cores, and other types of memory cores that are suitable for use within the memory device 810. In some embodiments, one or more of the memory circuits 845 or portions thereof may be configured as other types of storage class memory ("SCM"). Generally speaking, the memory circuits 845 may include any of a variety of Random Access Memory (RAM), Read-Only Memory (ROM), Programmable ROM (PROM), Erasable PROM (EPROM), Electrically EPROM (EEPROM), hard disk drives, flash drives, memory tapes, cloud memory, or any combination of primary and/or secondary memory that is suitable for performing the operations described herein.

It is to be understood that only some components of the computing system 800 are shown and described in FIG. 8. However, the computing system 800 may include other components such as various batteries and power sources, networking interfaces, routers, switches, external memory systems, controllers, etc. Generally speaking, the computing system 800 may include any of a variety of hardware, software, and/or firmware components that are needed or considered desirable in performing the functions described herein. Similarly, the host device 805, the input devices 815, the output devices 820, and the memory device 810, including the memory controller 840 and the memory circuits 845, may include hardware, software, and/or firmware components that are considered necessary or desirable in performing the functions described herein. In addition, in certain embodiments, the memory device 810 may integrate some or all of the components of the host device 805, including, for example, the CPU/GPU cores 830A-830N, and the CPU/GPU cores may be configured to execute the machine learning application 835, as described herein.

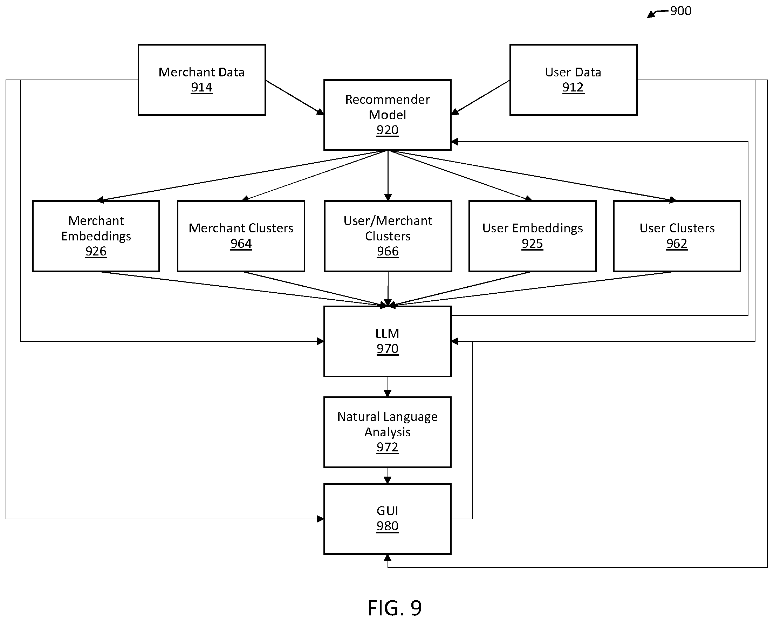

FIG. 9 is a block diagram of a system 900 including machine-learning models for generating a GUI displaying analytics of user behavior. The system includes a recommender model 920, an LLM 970, and a GUI 980. The recommender model 920 may be the same as the recommender models 220, 320, 420, 520, 620, 720 described herein. The recommender model 920 receives as input user data 912 and merchant data 914. While the user data 912 and the merchant data 914 are illustrated as being separate, the user data 912 and the merchant data 914 may be included in the same transaction data.

The recommender model 920 receives as input the user data 912 and the merchant data 914 to generate user embeddings 925, merchant embeddings 926, user clusters 962, and merchant clusters 964. The user embeddings 925 may represent features of users in the user data 912 and may be the same as the user embeddings 325 of FIG. 3. The merchant embeddings 926 may represent features of merchants in the merchant data 914 and may be the same as the merchant embeddings 326 of FIG. 3.

The user clusters 962 may be clusters of similar users generated using the recommender model 920. The user clusters 962 may be generated using the user embeddings 925 to find similar users based on distances between the user embeddings 925. The user clusters 962 can include groups of users grouped together by similarity. In some implementations, the user clusters 962 include the nearest users 460 of FIG. 4. The merchant clusters 964 may be clusters of similar merchants generated using the recommender model 920. The merchant clusters 964 may be generated using the merchant embeddings 926 to find similar merchants based on distances between the merchant embeddings 926. The merchant clusters 964 can include groups of merchants grouped together by similarity. In some implementations, the merchant clusters 964 include the nearest merchants 560 of FIG. 4.

The user/merchant clusters 966 may be clusters of similar users and merchants generated using the recommender model 920. The user/merchant clusters may be generated using the user embeddings 925 and the merchant embeddings 926 and/or the user clusters 962 and the merchant clusters 964. The user/merchant clusters 966 can include groups of users and merchants grouped together by similarity. In some implementations, the user/merchant clusters 966 include the nearest merchants to first user 660 of FIG. 6 and the nearest users to first merchant 760 of FIG. 7. The user/merchant clusters 966 can include groupings of merchants associated with groupings of users, such as a set of merchants where students (similar users) make purchases, or a set of merchants where young mothers (similar users) make purchases.

The LLM 970 receives as input the user data 912, the merchant data 914, the user embeddings 925, the merchant embeddings 926, the user clusters 962, the merchant clusters 964, and/or the user/merchant clusters 966 to generate the natural language analysis 972. The natural language analysis 972 can be displayed on the GUI 980. In some implementations, the natural language analysis 972 is displayed on the GUI 980 along with portions of the user data 912 and/or the merchant data 914. In an example, the natural language analysis 972 is displayed on the GUI with a chart showing user spending at different types of merchants.

The LLM 970 may receive as input the user data 912, the merchant data 914, the user embeddings 925, the merchant embeddings 926, the user clusters 962, the merchant clusters 964, and/or the user/merchant clusters 966 to generate the natural language analysis 972 based on a natural language query input by a user via the GUI 980. In an example, the LLM 970 receives as input a natural language query via the GUI 980 regarding users who purchase a type of products, causing the LLM 970 to receive as input the user embeddings 925, the merchant embeddings 926, the merchant clusters 964, and the user/merchant clusters 966 to identify users who purchase the type of products, what merchants sell the type of products, characteristics of users who purchase the type of products, and characteristics of merchants that sell the type of products, which may be included in, or contribute to, the natural language analysis 972. In an example, the natural language query is a request to identify characteristics of users similar to a selected user, causing the LLM 970 to receive as input the user embeddings 925 and the user clusters 962 to identify users similar to the selected user, and characteristics of the users similar to the selected user.

In some implementations, the LLM 970 provides input to the recommender model 920 based on the natural language query input by the user. In an example, the recommender model 920 can identify features for use in generating clusters of user and/or merchants based on the natural language query. In an example, the natural language query is "find me the likely pet owners," and the LLM 970 provides as input characteristics of pet owners, causing the recommender model 920 to use the characteristics of pet owners in generating the user clusters 962, the merchant clusters 964, and/or the user/-merchant clusters 966.

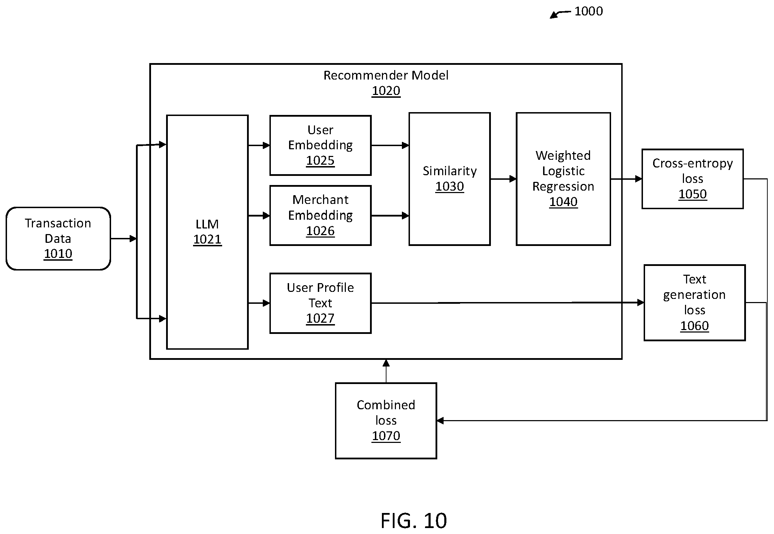

The GUI 980 can display the user data 912, the merchant data 914, and the natural language analysis 972. In some implementations, the GUI 980 can display the user embeddings 925, the merchant embeddings 926, the user clusters 962, the merchant clusters 964, and/or the user/merchant clusters 966. Examples of the GUI 980 are illustrated in FIGS. 10-12.

In some implementations, the LLM 970 is trained using a text-generation loss to reduce a loss between an expected text response and the natural language analysis 972 generated by the LLM 970. In some implementations, the recommender model 920 and the LLM 970 are trained using joint training using a combined loss based on a cross-entropy loss for the recommender model 920 and the text-generation loss for the LLM 970. In this way, the multi-task system 900 can be trained together to improve an accuracy and precision of the system 900.

FIG. 10 is a block diagram of an example system 1000 for training an LLM-based recommender model 1020. The recommender model 1020 is trained to receive as input transaction data 1010 to generate a user embedding 1025, a merchant embedding 1026, and user profile text 1027. The training of the recommender model 1020 causes the user embedding 1025, the merchant embedding 1026, and the user profile text 1027 to be accurate. The recommender model 1020 is similar to the recommender model 320 of FIG. 3, but the recommender model 1020 includes an LLM 1021 and can be referred to as the LLM-based recommender model 1020. The training of the recommender model 1020 is a multi-task training to train the tasks of generating the user embedding 1025, generating the merchant embedding 1026, and generating the user profile text 1027.

The LLM 1021 receives as input transaction data 1010 to generate the user embedding 1025, the merchant embedding 1026, and the user profile text 1027. The user embedding 1025 represents features of a user from the transaction data 1010. The merchant embedding 1026 represents features of a merchant from the transaction data 1010. The user profile text 1027 is a natural language description of characteristics of the user and how the user and the merchant are connected (i.e., how they are similar or related).

A similarity comparison 1030 is performed to determine a similarity of the user embedding 1025 and the merchant embedding 1026 (e.g., similarity score). The similarity comparison 1030 may be a dot product of the user embedding 1025 and the merchant embedding 1026 representing a similarity or distance between the user embedding 1025 and the merchant embedding 1026. The output of the similarity comparison 1030 (i.e., the dot products of the user embedding 1025 and the merchant embedding 1026) is provided as input to a weighted logistic regression 1040. The weighted logistic regression 1040 may provide weights to interactions (e.g., transactions) between users and merchants. In an example, the weighted logistic regression 1040 provides weights to transactions to prevent increase a sensitivity of purchases among a large number of merchants. The weighted logistic regression 1040 may incorporate weights into a loss function for the recommender model 1020 to generate a cross-entropy loss 1050. The weights may reflect a frequency of purchases by a user, transaction amounts of purchases, and/or a number of purchases at a merchant over a total number of purchases, as discussed in conjunction with FIG. 3.

The cross-entropy loss 1050 is combined with a text-generation loss 1060 to generate a combined loss 1070. In an example, the cross-entropy loss 1050 is summed with the text-generation loss 1060 to generate the combined loss 1070. Weights can be applied to the cross-entropy loss 1050 and/or the text-generation loss 1060. In an example, the cross-entropy loss 1050 is summed with the text-generation loss 1060 to generate the combined loss 1070, with weights applied to the cross-entropy loss 1050 and the text-generation loss 1060. In this example, the weights can be tuned during the training process to improve a performance of the recommender model 1020. The text-generation loss 1060 represents a difference between an expected user profile text and the user profile text 1027 generated by the LLM 1021. The expected user profile text can be a ground-truth (e.g., manually-generated) text description of the user profile or characteristics of the user. In some implementations, the text-generation loss 1060 can represent a difference between an explanation of similarity between the user and merchant in the user profile text 1027 and an actual similarity between the user and merchant as determined by the similarity comparison 1030. In some implementations, the text-generation loss 1060 represents a difference between characteristics of the user and the merchant included in the user profile text 1027 and characteristics of the user and the merchant in the transaction data 1010. In some implementations, the text-generation loss 1060 represents a difference between characteristics of the user and the merchant included in the user profile text 1027 and characteristics of the user and the merchant in the user embedding 1025 and the merchant embedding 1026, respectively.

The combined loss 1070 is used to train (e.g., update parameters of) the recommender model 1020 to improve the multi-task performance of the recommender model 1020. The combined loss 1070 can be used to update weights and/or parameters of each layer of the recommender model 1020. The combined loss 1070 can be used to update the LLM 1021, the user embedding 1025, the merchant embedding 1026, and the weighted logistic regression 1040. As there are no ground-truth embeddings, updating the embeddings based on the combined loss 1070 allows for the embeddings to be improved to improve the overall training process of the LLM 1021 and the weighed logistic regression.

The recommender model 1020 is similar to the recommender model 320 of FIG. 3, but with the neural networks 323, 324 replaced with the LLM 1021. Using the LLM 1021 allows for the addition of the text generation task. The added text generation task improves the training of the recommender model 1020 by providing an additional view of the performance of the recommender model 1020 using the text-generation loss 1060. In this way, the recommender model 1020 can be trained to be more accurate and more generalizable relative to training using the cross-entropy loss 1050 alone. Additionally, the added text generation task allows the recommender model 1020 to generate text descriptions of user profiles that provide explainable insight into how the recommender model 1020 compares users and merchants.

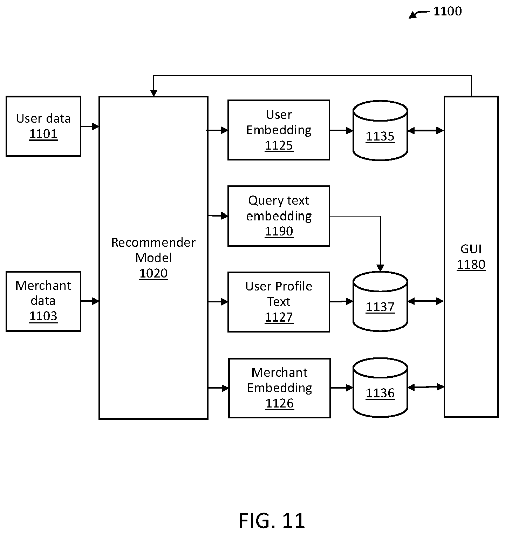

FIG. 11 is a block diagram of an example system 1100 for using the LLM-based recommender model 1020 of FIG. 10 to generate data for display on a GUI 1180. The recommender model 1020, once trained as described in conjunction with FIG. 10, receives as input user data 1101 and merchant data 1103 to generate a user embedding 1125, a merchant embedding 1126, and user profile text 1127. The user data 1101 and the merchant data 1103 can be retrieved from transaction data. The user embedding 1125 is stored in a user embedding database 1135, the merchant embedding is stored in a merchant embedding database 1136, and the user profile text 1127 is stored in a user profile database 1137. The user embedding database 1135 stores user embeddings of a plurality of users. The merchant embedding database 1136 stores merchant embeddings of a plurality of merchants. The user profile database 1137 stores user profile text for a plurality of user profiles.

The GUI 1180 allows a user to interact with the data generated by the recommender model 1020, similar to the GUI 980 of FIG. 9. When a user submits a query via the GUI 1180, the GUI retrieves relevant data from the user embedding database 1135, the merchant embedding database 1136, and the user profile database 1137 and/or provides the query to the recommender model 1020. In an example, a natural language query is submitted via the GUI 1180 and provided to the recommender model 1020. The recommender model 1020 encodes the query text of the natural language query as a query text embedding 1190 to search the user profile database 1137 for users corresponding to the query text. In an example, the query text is "find me the likely pet owners" which is encoded as the query text embedding 1190 to search the user profile database 1137 for user profiles generated by the LLM 1021 of the recommender model 1020 mentioning pets or pet ownership. In some implementations, the user profiles in the user profile database 1137 are stored as use profile embeddings for comparison with the query text embedding 1190.

As discussed in greater detail below, the GUI 1180 allows a user to select a particular user. In response to a selection of the user, the GUI 1180 retrieves data from the user embedding database 1135, the merchant embedding database 1136, and the user profile database 1137 related to the selected user. In an example, the GUI 1180 retrieves a set of similar users to the selected user from the user embedding database 1135, a set of recommended merchants for the selected user from the merchant embedding database 1136, and a user profile of the selected user from the user profile database 1137.

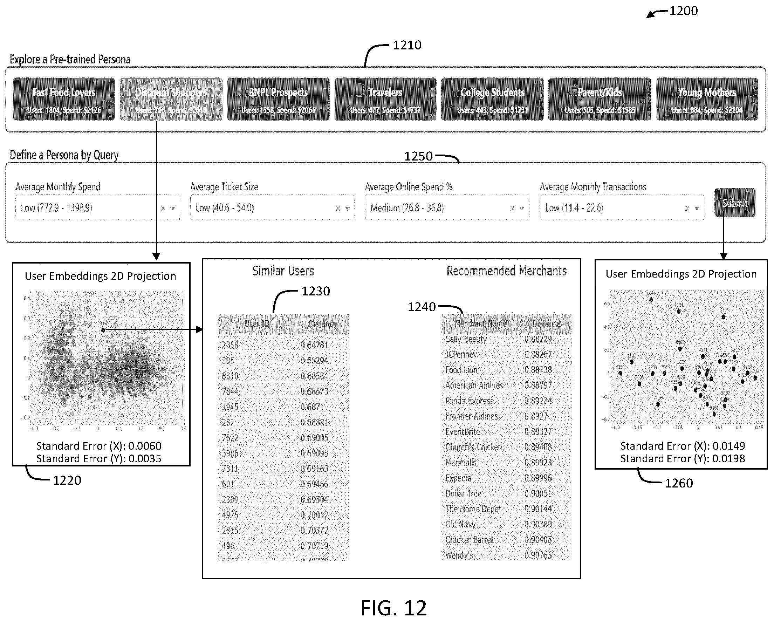

FIG. 12 is an example user interface 1200 of the GUI 980 of FIG. 9 or the GUI 1180 of FIG. 11. The user interface 1200 includes user segments 1210, such as the user clusters 962 or the user/merchant clusters 966. Selecting one of the user segments 1210 causes the user interface 1200 to display a chart of similar users 1220. The chart of similar users 1220 includes a cluster of users with similar characteristics (e.g. a user cluster). Selecting a user from the chart of similar users 1220 causes the user interface 1200 to display a set of similar users 1230 that are similar to the selected user and a set of recommended merchants 1240 that are recommended for the selected user based on characteristics of the selected user and/or characteristics and historical transactions of the set of similar users 1230. The set of similar users 1230 can correspond to the nearest users 460 of FIG. 4 and the set of recommended merchants 1240 can correspond to the nearest merchants to first user 660.

The user interface 1200 includes recency, frequency, and monetary value (RFM) metrics 1250. The RFM metrics 1250 can be selected by a user to filter users included in the user data 912. The RFM metrics 1250 can be used to query the user data 912 to cause the user interface 1200 to display an RFM metric chart of users 1260. The RFM metric chart of users 1260 includes users of the user data 912 that match the selected RFM metrics 1250.

The chart of similar users 1220 and the RFM metric chart of users 1260 can be generated by mapping multi-dimensional user characteristics to a two-dimensional representation (e.g., principal component analysis, t-SNE). The chart of similar users 1220 may represent a more similar set of users than the RFM metric chart of users 1260. For example, the chart of similar users 1220 has an x-axis standard error of 0.0060 and a y-axis standard error of 0.0035, while the RFM metric chart of users 1260 has an x-axis standard error of 0.0149 and a y-axis standard error of 0.0198. In this example, the chart of similar users 1220 has an x-axis standard error 2.48 times smaller than the x-axis standard error of the RFM metric chart of users 1260 and the chart of similar users 1220 has a y-axis standard error that is 5.66 times smaller than the y-axis standard error of the RFM metric chart of users 1260. Thus, the user cluster represented by the chart of similar users 1220 is much more accurate and useful for finding similar users than the RFM metrics 1250.

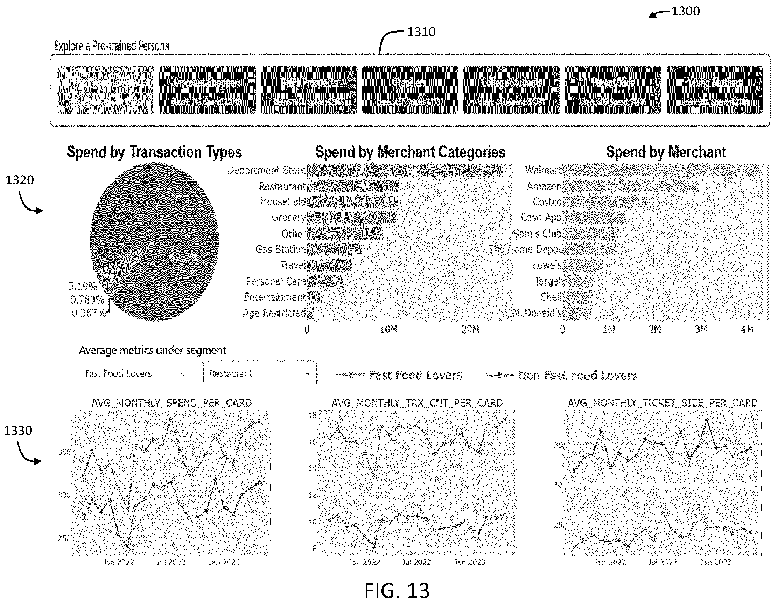

FIG. 13 is an example user interface 1300 of the GUI 980 of FIG. 9 or the GUI 1180 of FIG. 11. The user interface 1300 includes user segments 1310, such as the user clusters 962 or the user/merchant clusters 966. Selecting one of the user segments 1310 causes the user interface 1300 to display group metrics 1320 (e.g., segment metrics) and RFM metrics 1330. The group metrics 1320 can include spend by transaction types, indicating that the selected user segment performs 62.2% of its overall spend in in-store transactions, 31.4% of its overall spend in online transactions, and 6.4% of its overall spend in other transaction types. The group metrics 1320 can include spend by merchant categories, indicating amounts spent by the selected user segment in different merchant categories. The group metrics 1320 can include spend by merchant, indicating amounts spent by the selected user segment at different merchants.

The RFM metrics 1330 can include average monthly spend per card, average monthly transaction count per card, and average monthly ticket size per card, comparing these values over time to other user segments, or the user population overall. The group metrics 1320 and/or RFM metrics 1330 can be used to validate the generated user segments 1310. For example, the RFM metrics 1330 indicate that the selected user segment of "Fast Food Lovers" has a higher average monthly spend per card, a higher monthly transaction count per card, and a lower monthly ticket size per card compared to other users. The group metrics 1320 and/or the RFM metrics 1330 can be compared to assumptions about the selected user segment of "Fast Food Lovers" to determine whether the selected user segment is accurate. For example, the spend by merchant categories in the group metrics 1320 has "Restaurant" as the second-highest merchant category, the high values of the average monthly transaction count per card, and the low values of the average monthly ticket size per card are consistent with frequent, relatively cheap purchases at fast-food restaurants.

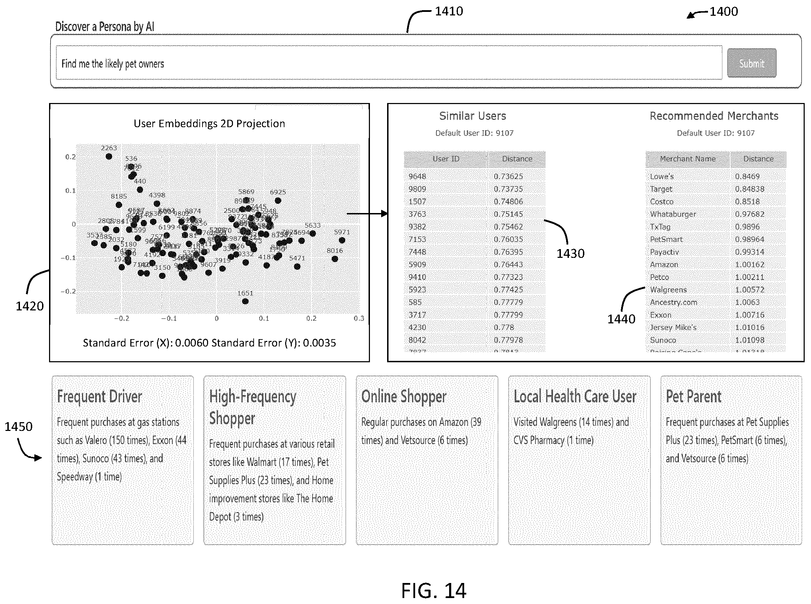

FIG. 14 is an example user interface 1400 of the GUI 980 of FIG. 9 or the GUI 1180 of FIG. 11. The user interface 1410 includes a natural language query interface 1410 for submitting natural language queries, such as "find me the likely pet owners." The natural language query interface 1410 can be used to provide queries to the LLM 970. Inputting a natural language query interface 1410 causes the user interface 1400 to display a chart of similar users 1420. The chart of similar users 1420 is similar to the chart of similar users 1220 of FIG. 12, illustrating a 2D projection of multi-dimensional user characteristics to display a cluster of similar users, grouped according to at least one characteristics associated with the natural language query. In the illustrated example, the chart of similar users 1420 includes users that are likely to own pets.

Selecting a user in the chart of similar users 1420 causes the user interface 1400 to display a set of similar users 1430, a set of recommended merchants 1440, and/or a natural language analysis 1450. The set of similar users 1430 can include the users displayed in the chart of similar users 1420, ranked according to similarity to (i.e., distance from) the selected user, similar to the set of similar users 1230 of FIG. 12. The set of recommended merchants 1440 includes merchants that are recommended for the selected user based on characteristics of the selected user and/or characteristics and historical transactions of the set of similar users 1430, similar to the set of similar users 1230 of FIG. 12. The natural language analysis 1450 may be the natural language analysis 972 of FIG. 9. In some implementations, the natural language analysis 1450 includes explanations as to how the selected user corresponds to the natural language query, or why the selected user is included in the set of similar users 1420 in response to the natural language query. In the illustrated example, the natural language analysis 1450 includes characteristics of the selected user as well as explanations as to why the selected user is likely a pet owner.

The user interface 1200 of FIG. 12, the user interface 1300 of FIG. 13, and the user interface 1400 of FIG. 14 may each be part of an overarching user interface, and/or different user interface pages of the overarching user interface. In an example, a user has an option to select a user segment, select RFM metrics, and/or submit a natural language query to view similar users in a chart of similar users and/or group metrics and RFM metrics. Similarly, selecting a user from a chart of similar users can cause the user interface to display a set of similar users, a set of recommended merchants, and/or a natural language query indicating characteristics of the selected user and including explanations as to how the selected user corresponds to the query (e.g., natural language query, selection of user segment, selection of RFM metrics).

The various illustrative logical blocks, circuits, modules, routines, and algorithm steps described in connection with the embodiments disclosed herein can be implemented as electronic hardware, or combinations of electronic hardware and computer software. To clearly illustrate this interchangeability, various illustrative components, blocks, modules, and steps have been described above generally in terms of their functionality. Whether such functionality is implemented as hardware, or as software that runs on hardware, depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A control processor can synthesize a model for an FPGA. For example, the control processor can synthesize a model for logical programmable gates to implement a tensor array and/or a pixel array. The control channel can synthesize a model to connect the tensor array and/or pixel array on an FPGA, a reconfigurable chip and/or die, and/or the like. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While the above detailed description has shown, described, and pointed out novel features as applied to various embodiments, it can be understood that various omissions, substitutions, and changes in the form and details of the devices or algorithms illustrated can be made without departing from the spirit of the disclosure. As can be recognized, certain embodiments described herein can be embodied within a form that does not provide all of the features and benefits set forth herein, as some features can be used or practiced separately from others.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances, where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, unless otherwise noted, the use of the words "approximate," "about," "around," "substantially," etc., mean plus or minus ten percent.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments. It is intended that the scope of the invention be defined by the claims appended hereto and their equivalents.

## Claims

1. A system comprising:

one or more processors; and
a computer-readable, non-transitory medium including instructions which, when executed by the one or more processors, cause at least one of the one or more processors to:

obtain transaction data including a first merchant and a first user; and
train a machine-learning model using the transaction data by:

executing the machine-learning model using as input the transaction data to generate a first merchant embedding corresponding to the first merchant and a first user embedding corresponding to the first user;
determining a similarity between the first merchant embedding and the first user embedding; and
updating the machine-learning model based on whether the first user made a purchase at the first merchant within a predetermined time period.

2. The system of claim 1, wherein the instructions cause the one or more processors to update the machine-learning model based on a number of purchases made by the first user at the first merchant within the predetermined time period.

3. The system of claim 2, wherein the instructions cause the one or more processors to update the machine-learning model using a weighted number of purchases made by the first user at the first merchant relative to other purchases made by the first user within the predetermined time period.

4. The system of claim 2 or 3, wherein the instructions cause the one or more processors to weight the number of purchases made by the first user at the first merchant using transaction amounts of the number of purchases.

5. The system of any of the preceding claims, wherein the instructions cause the one or more processors to weight whether the first user made a purchase at the first merchant within the predetermined time period based on a number of other users who did not make a purchase at the first merchant within the predetermined time period.

6. The system of any of the preceding claims, wherein the instructions cause the one or more processors to train the machine-learning model by executing the machine-learning model using as input the transaction data and first user features of the first user and first merchant features of the first merchant.

7. The system of any of the preceding claims, wherein the transaction data includes a plurality of merchants and a plurality of users, and wherein the instructions cause the one or more processors to execute the machine-learning model using as input the transaction data to generate a plurality of merchant embeddings and a plurality of user embeddings.

8. The system of claim 7, wherein the instructions cause the one or more processors to:

execute the machine-learning model using as input second user data of a second user to generate a second user embedding; determine similarity scores between the second user embedding and the plurality of user embeddings; and based on the similarity scores, determine a set of nearest users of the plurality of users to the second user; or
execute the machine-learning model using as input second merchant data of a second merchant to generate a second merchant embedding; determine similarity scores between the second merchant embedding and the plurality of merchant embeddings; and based on the similarity scores, determine a set of nearest merchants of the plurality of users to the second merchant; or
execute the machine-learning model using as input second user data of a second user to generate a second user embedding; determine similarity scores between the second user embedding and the plurality of merchant embeddings; and based on the similarity scores, determine a set of nearest merchants of the plurality of users to the second user.

9. A method comprising:

obtaining transaction data including a first merchant and a first user;
training a machine-learning model using the transaction data by:

executing the machine-learning model using as input the transaction data to generate a first merchant embedding corresponding to the first merchant and a first user embedding corresponding to the first user;
determining a similarity between the first merchant embedding and the first user embedding; and
updating the machine-learning model based on whether the first user made a purchase at the first merchant within a predetermined time period.

**10.** The method of claim 9, further comprising updating the machine-learning model based on a number of purchases made by the first user at the first merchant within the predetermined time period.

**11.** The method of claim 10, wherein updating the machine-learning model based on the number of purchases made by the first user at the first merchant includes weighting the number of purchases made by the first user at the first merchant relative to other purchases made by the first user within the predetermined time period.

**12.** The method of claim 10 or 11, further comprising weighting the number of purchases made by the first user at the first merchant using transaction amounts of the number of purchases.

**13.** The method of any of claims 9 to 12, further comprising weighting whether the first user made a purchase at the first merchant within the predetermined time period based on a number of other users who did not make a purchase at the first merchant within the predetermined time period.

**14.** The method of any of claims 9 to 13, wherein training the machine-learning model includes executing the machine-learning model using as input the transaction data and first user features of the first user and first merchant features of the first merchant.

**15.** The method of any of claims 9 to 14, wherein the transaction data includes a plurality of merchants and a plurality of users, and wherein training the machine-learning model includes executing the machine-learning model using as input the transaction data to generate a plurality of merchant embeddings and a plurality of user embeddings.

**16.** The method of claim 15, further comprising:

executing the machine-learning model using as input second user data of a second user to generate a second user embedding; determining similarity scores between the second user embedding and the plurality of user embeddings; and based on the similarity scores, determining a set of nearest users of the plurality of users to the second user; or
executing the machine-learning model using as input second merchant data of a second merchant to generate a second merchant embedding; determining similarity scores between the second merchant embedding and the plurality of merchant embeddings; and based on the similarity scores, determining a set of nearest merchants of the plurality of users to the second merchant; or

executing the machine-learning model using as input second user data of a second user to generate a second user embedding; determining similarity scores between the second user embedding and the plurality of merchant embeddings; and based on the similarity scores, determining a set of nearest merchants of the plurality of users to the second user.

100

Transaction Data
110

ML Models
120

Affinity Profiles
130

FIG. 1

FIG. 2

FIG. 3

400

First User Data
410

Recommender
Model
420

First User
Embedding
430

Other User
Embeddings
440

Similarity
450

Nearest Users
460

FIG. 4

First Merchant Data 510

Recommender Model 520

First Merchant Embedding 530

Other Merchant Embeddings 540

Similarity 550

Nearest Merchants 560

500

FIG. 5

FIG. 6

700

First Merchant Data 710

Recommender Model 720

First Merchant Embedding 730

User Embeddings 740

Similarity 750

Nearest Users to First Merchant 760

FIG. 7

FIG. 8

EP 4 664 377 A1

FIG. 9

FIG. 10

FIG. 11

1200

Explore a Pre-trained Persona — 1210

| Fast Food Lovers | Discount Shoppers | BNPL Prospects | Travelers | College Students | Parent/Kids | Young Mothers |
|---|---|---|---|---|---|---|
| Users: 1804, Spend: $2126 | Users: 716, Spend: $2010 | Users: 1558, Spend: $2066 | Users: 477, Spend: $1737 | Users: 443, Spend: $1731 | Users: 505, Spend: $1585 | Users: 884, Spend: $2104 |

Define a Persona by Query — 1250

| Average Monthly Spend | Average Ticket Size | Average Online Spend % | Average Monthly Transactions | |
|---|---|---|---|---|
| Low (772.9 - 1398.9) | Low (40.6 - 54.0) | Medium (26.8 - 36.8) | Low (11.4 - 22.6) | Submit |

### User Embeddings 2D Projection

Standard Error (X): 0.0060
Standard Error (Y): 0.0035

— 1220

### Similar Users
— 1230

| User ID | Distance |
|---|---|
| 2358 | 0.64281 |
| 395 | 0.68294 |
| 8310 | 0.68584 |
| 7844 | 0.68673 |
| 1945 | 0.6871 |
| 282 | 0.68881 |
| 7622 | 0.69005 |
| 3986 | 0.69095 |
| 7311 | 0.69163 |
| 601 | 0.69466 |
| 2309 | 0.69504 |
| 4975 | 0.70012 |
| 2815 | 0.70372 |
| 496 | 0.70719 |
| 8340 | 0.70770 |

### Recommended Merchants
1240

| Merchant Name | Distance |
|---|---|
| Sally Beauty | 0.88229 |
| JCPenney | 0.88267 |
| Food Lion | 0.88738 |
| American Airlines | 0.88797 |
| Panda Express | 0.89234 |
| Frontier Airlines | 0.8927 |
| EventBrite | 0.89327 |
| Church's Chicken | 0.89408 |
| Marshalls | 0.89923 |
| Expedia | 0.89996 |
| Dollar Tree | 0.90051 |
| The Home Depot | 0.90144 |
| Old Navy | 0.90389 |
| Cracker Barrel | 0.90405 |
| Wendy's | 0.90765 |

### User Embeddings 2D Projection

Standard Error (X): 0.0149
Standard Error (Y): 0.0198

— 1260

## FIG. 12

FIG. 13

Discover a Persona by AI — 1410 — 1400

Find me the likely pet owners | Submit

**User Embeddings 2D Projection** — 1420

Standard Error (X): 0.0060 Standard Error (Y): 0.0035

**Similar Users**
Default User ID: 9107

| User ID | Distance |
|---|---|
| 9648 | 0.73625 |
| 9809 | 0.73735 |
| 1507 | 0.74806 |
| 3763 | 0.75145 |
| 9382 | 0.75462 |
| 7153 | 0.76035 |
| 7448 | 0.76395 |
| 5909 | 0.76443 |
| 9410 | 0.77323 |
| 5923 | 0.77425 |
| 585 | 0.77779 |
| 3717 | 0.77799 |
| 4230 | 0.778 |
| 8042 | 0.77978 |
| 7827 | 0.7842 |

— 1430

**Recommended Merchants**
Default User ID: 9107

| Merchant Name | Distance |
|---|---|
| Lowe's | 0.8469 |
| Target | 0.84838 |
| Costco | 0.8518 |
| Whataburger | 0.97682 |
| TxTag | 0.9896 |
| PetSmart | 0.98964 |
| Payactiv | 0.99314 |
| Amazon | 1.00162 |
| Petco | 1.00211 |
| Walgreens | 1.00572 |
| Ancestry.com | 1.0063 |
| Exxon | 1.00716 |
| Jersey Mike's | 1.01016 |
| Sunoco | 1.01098 |
| Raising Cane's | 1.01318 |

— 1440

1450

**Frequent Driver**

Frequent purchases at gas stations such as Valero (150 times), Exxon (44 times), Sunoco (43 times), and Speedway (1 time)

**High-Frequency Shopper**

Frequent purchases at various retail stores like Walmart (17 times), Pet Supplies Plus (23 times), and Home improvement stores like The Home Depot (3 times)

**Online Shopper**

Regular purchases on Amazon (39 times) and Vetsource (6 times)

**Local Health Care User**

Visited Walgreens (14 times) and CVS Pharmacy (1 time)

**Pet Parent**

Frequent purchases at Pet Supplies Plus (23 times), PetSmart (6 times), and Vetsource (6 times)

FIG. 14

EP 4 664 377 A1

**EUROPEAN SEARCH REPORT**

| | Application Number |
|---|---|
| | EP 25 17 9763 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/226460 A1 (BRUSS CHRISTOPHER [US] ET AL) 16 July 2020 (2020-07-16) * paragraphs [0011] - [0049] * ----- | 1-16 | INV. G06Q30/0201 G06Q30/0204 |
| X | US 2021/103925 A1 (DEV SUNIPA [US] ET AL) 8 April 2021 (2021-04-08) * paragraphs [0024] - [0079] * ----- | 1-16 | |
| X | US 2020/104865 A1 (BHASIN GURPREET SINGH [US]) 2 April 2020 (2020-04-02) * paragraphs [0030] - [0049] * ----- | 1-16 | |

| TECHNICAL FIELDS SEARCHED (IPC) |
|---|
| G06Q G06N |

The present search report has been drawn up for all claims

| Place of search | Date of completion of the search | Examiner |
|---|---|---|
| The Hague | 3 October 2025 | Pomocka, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 9763

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2025

| Patent document cited in search report | Publication date | Patent family member(s) | Publication date |
|---|---|---|---|
| US 2020226460 A1 | 16-07-2020 | US 2020226460 A1 | 16-07-2020 |
| | | US 2020349437 A1 | 05-11-2020 |
| | | US 2024046095 A1 | 08-02-2024 |
| US 2021103925 A1 | 08-04-2021 | NONE | |
| US 2020104865 A1 | 02-04-2020 | CN 110969477 A | 07-04-2020 |
| | | EP 3637350 A1 | 15-04-2020 |
| | | US 2020104865 A1 | 02-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63659953
- US 63754199